# DEMANDE DE BREVET EUROPEEN

(11) **EP 0 955 229 A1**
(43) Date de publication de la demande: **10.11.1999**
(21) Numéro de dépôt: 99440099.2
(22) Date de dépôt: 30.04.1999
(51) Int. Cl.: B62D 33/06, B62D 21/16

(54) **Structure de cabine pour véhicule de voirie**

(30) Priorité: 06.05.1998 FR 9805922
(71) Demandeur: Internationale Stiftung für Technisches Know How, 9430 Vaduz (LI)
(72) Inventeur: Jungo, Nicolas, 68870 Bartenheim (FR)
(74) Mandataire: Burkard, Thierry

(57) **Abrégé**

L'invention concerne une structure de cabine, plus particulièrement conçue pour être adaptée sur un véhicule de voirie.

La cabine (1) est principalement constituée de deux cadres latéraux (2, 2') en aluminium, disposés latéralement au dessus du châssis de la cabine, lui-même fixé sur le châssis (3) du véhicule, par exemple au moyen de plots élastiques, lesdits cadres (2, 2') étant disposés directement contre le réservoir à eau (5). Le réservoir d'eau (5) forme la paroi arrière et l'assise de la cabine du véhicule, la partie arrière de chaque profilé épousant la forme dudit réservoir.

## Description

La présente invention concerne une structure de cabine , plus particulièrement conçue pour être adaptée sur un véhicule de voirie urbaine.

Les contraintes en matière d'entretien et de nettoyage des voies publiques, notamment urbaines, sont extrêmement variés. L'une des plus importantes est la nécessité de pouvoir disposer de véhicules adaptés à la configuration des voies à traiter.

Dans le cas de rues étroites ou présentant une chaussée irrégulière, il est souvent malaisé, voir impossible d'utiliser les véhicules classiques, qui sont peu maniables, trop lourds et exigent une emprise au sol trop importante.

Il existe donc un besoin réel en véhicules à la fois légers, simples et maniables.

Les véhicules classiques se composent, pour l'essentiel, d'un châssis comportant au moins deux essieux et auquel peuvent être reliés les moyens de nettoyage tels que des brosses ou balais, un réservoir d'eau de capacité suffisante, un poste de commande, et, éventuellement des moyens d'aspiration et un réceptacle pour recevoir les résidus aspirés.

Le poste de commande consiste le plus souvent en une cabine placée à l'avant du châssis dans le sens de la marche, à partir de laquelle un opérateur peut à la fois assurer la conduite du véhicule et commander les différentes fonctions de l'engin.

La succession, dans le même plan, de la cabine, de la réserve d'eau, voire du contenant pour déchets contribue à augmenter le gabarit du véhicule.

La structure de ces véhicule est complexe, et impose une parfaite coopération des différents éléments lors des opérations de montage.

Ces opérations exigent de ce fait une durée importante , ce qui obère le coût final de fabrication des engins.

L'invention se propose de remédier aux différents inconvénients énumérés ci-dessus en réalisant une nouvelle structure de cabine pour véhicule de voirie.

La cabine selon la présente invention est plus particulièrement caractérisée par sa structure en tubes, qui coopère avec la paroi avant du réservoir d'eau.

L'invention sera décrite ci-après à l'aide d'un exemple non limitatif de réalisation, et en référence aux dessins annexés, dans lesquels :
- la figure 1 est une vue de trois quart avant d'une structure de cabine selon l'invention, montée sur l'avant du châssis d'un véhicule de voirie,
- la figure 2 est une vue de côté de la structure représentée à la figure 1,
- la figure 3 est une vue arrière de la structure,
- la figure 4 est une vue éclatée montrant les différents éléments constituant la structure.

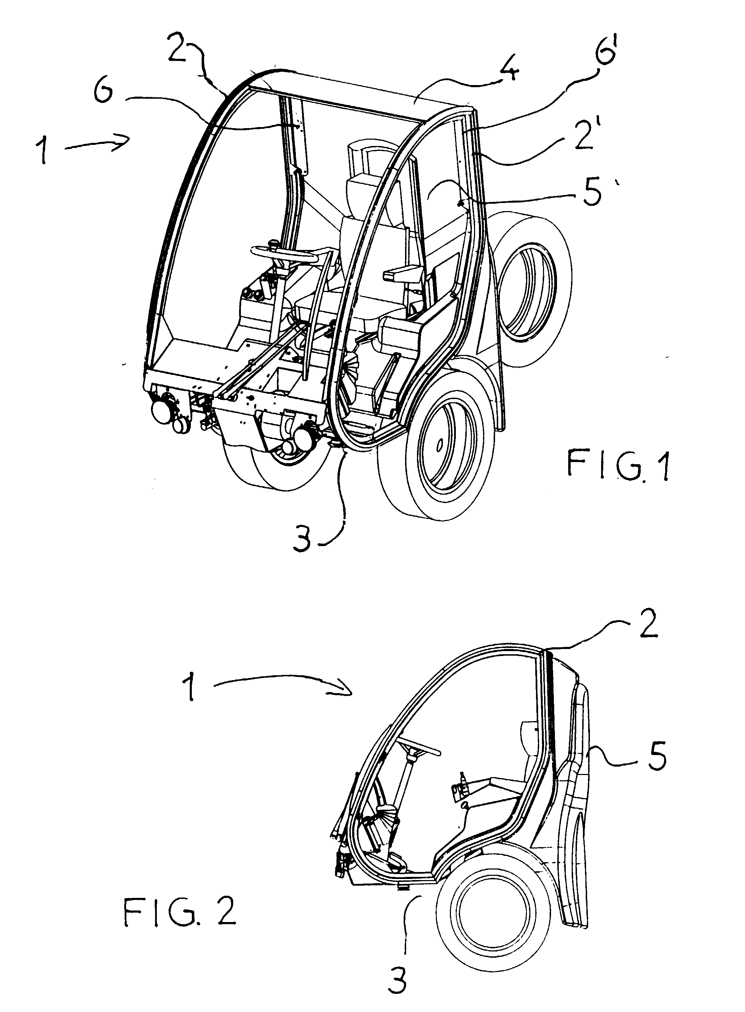

En référence aux figures annexées, et plus particulièrement à la figure 1, la cabine, désignée sous référence générale (1) est principalement constituée de deux cadres latéraux (2, 2') en aluminium, disposés latéralement au dessus du châssis de la cabine, lui-même fixé sur le châssis (3) du véhicule, par exemple au moyen de plots élastiques (non représentés).

Les tubes qui composent les cadres sont assemblés à froid, par collage, par rivetage, par vissage ou par tout autre moyen équivalent.

Le châssis (3) peut être recouvert d'une structure de sol sur laquelle seront montés les moyens de commande et de contrôle formant l'intérieur de la cabine.

Les cadres latéraux (2, 2') sont fixés par la base au dessus du châssis (3).

La structure est rigidifiée grâce à un élément en tôle (4) formant toit, qui relie les extrémités supérieures des cadres (2, 2').

L'ensemble est disposé directement contre le réservoir d'eau (5), qui forme ainsi la paroi arrière et l'assise de la cabine du véhicule, la partie arrière de chaque profilé épousant la forme dudit réservoir.

L'étanchéité de la cabine pourra être assurée par deux plaques de tôle (6, 6') prolongeant la partie supérieure des cadres (2, 2') et visés dans des inserts de forme appropriée ménagés en correspondance dans la paroi du réservoir (5).

L'une des caractéristiques essentielles de la cabine selon l'invention est la possibilité de procéder à un assemblage à froid.

Le réservoir (5) sera de ce fait réalisé par rotomoulage, dans un matériau dont la température de fusion est basse, tel le polyéthylène.

L'assemblage de la cabine pourra avantageusement être complété par un jointage d'étanchéité entre les cadres et le réservoir, par exemple en caoutchouc ou en élastomère.

Ce jointage est important, dans la mesure où sous l'effet de la chaleur ou de variation de température à la hausse, la dilatation du réservoir sera supérieure à celle des cadres, un matériau tel que le polyéthylène ne se prêtant pas par ailleurs au collage.

Enfin, la structure pourra recevoir un vitrage sur l'avant et sur les côtés, ainsi que divers éléments d'habillage d'ordre esthétique.

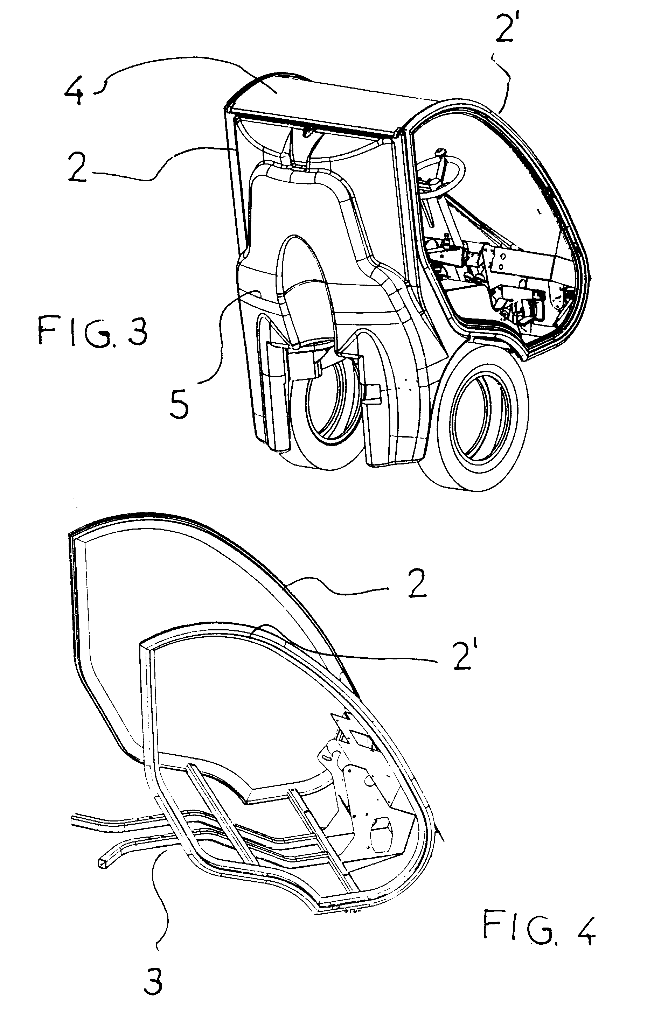

Les figures 2 et 3 permettent de comprendre la manière dont les cadres (2, 2') et le réservoir (5) coopèrent.

Le réservoir fait en effet fonction de paroi arrière intégrale et d'assise, et intègre notamment le siège réservé au conducteur ainsi que d'autres éléments ou accessoires nécessaire à la conduite du véhicule ou à son utilisation projetée.

La figure 4 illustre la grande simplicité de la cabine obtenue au moyen de la structure selon l'invention, qui est notamment caractérisée par le très petit nombre d'éléments qui la composent.

De ce fait, le coût de réalisation d'une structure de cabine selon l'invention est peu élevé. D'autre part, les opérations de montage sont très simples et très rapides, et ne nécessitent pas de compétences très spécialisées, ni la mise en oeuvre de procédures complexes ou délicates.

Les éléments composant la cabine seront préassemblés, et l'ensemble cadre-réservoir sera disposé d'un seul bloc sur le châssis du véhicule.

Grâce à cette conception, les opérations d'entretien et de remplacement sont grandement facilitées et n'exigent pas de budget important. De plus, la durée d'immobilisation des véhicules sera fortement réduite par rapport aux opérations de maintenance sur des véhicules de type classique.

Par ailleurs, la structure de cabine selon l'invention offre d'excellentes qualités d'isolation phonique. En effet, la présence d'un réservoir d'eau d'un volume important permet d'absorber en grande partie le bruit généré par la turbine d'aspiration et les éléments de motorisation.

## Revendications

1. Structure de cabine pour véhicules de voirie, caractérisée en ce qu'elle comporte deux cadres latéraux (2, 2'), fixés latéralement sur le châssis de la cabine au dessus du châssis (3) du véhicule et solidarisées dans leur partie supérieure au moyen d'un élément de toit (4), lesdits cadres (2, 2') étant constitués de tubes profilés assemblés à froid, disposés directement contre le réservoir à eau (5), de telle sorte que ledit réservoir forme la paroi arrière et l'assise de la cabine.

2. Structure suivant la revendication 2, caractérisée en ce que les tubes sont en aluminium.

3. Structure suivant l'une des revendications précédentes, caractérisée en ce que la partie arrière de chaque profilé constituant les cadres (2, 2') épouse la forme du réservoir (5).

4. Structure suivant l'une des revendications précédentes, caractérisée en ce que le réservoir (5) est réalisé par rotomoulage, dans un matériau dont la température de fusion est basse.

5. Structure suivant l'une des revendications précédentes, caractérisée en ce que le réservoir (5) est en polyéthylène.

6. Cabine obtenue par assemblage de la structure selon l'une des revendication précédente, caractérisée en ce que l'assemblage est effectué à froid.
